# EUROPEAN PATENT SPECIFICATION

(11) **EP 2 555 383 B1**
(45) Date of publication and mention of the grant of the patent: **25.09.2019**
(21) Application number: 11176151.6
(22) Date of filing: 01.08.2011
(51) Int. Cl.: H02K 1/27, H02K 15/03

(54) **Permanent magnet assembly with sliding fixing arrangement and method for fixing a permanent magnet onto a base plate**
Dauermagnetanordnung mit verschiebarer Befestigung und Verfahren zur Befestigung eines Dauermagneten auf einer Grundplatte
Ensemble formant aimant permanent doté d'une fixation ä coulissement et procédé pour fixer un aimant permanent sur une plaque de base

(43) Date of publication of application: 06.02.2013
(73) Proprietor: Siemens Gamesa Renewable Energy A/S, 7330 Brande (DK)
(72) Inventor: Thisted, Jan, 8830 Tjele (DK); Urda, Adriana Cristina, 5230 Odense M (DK); Valbjoern, Jesper, 6000 Kolding (DK)
(74) Representative: Aspacher, Karl-Georg

(56) References cited:
- EP-A1- 2 348 619
- WO-A1-2009/068736
- US-A1- 2010 231 085
- US-A1- 2011 043 065

## Description

The present invention relates to the technical field of electrical machines having a rotor which comprises magnets, in particular permanent magnets. In particular, the present invention relates to a permanent magnet assembly for an electrical machine. Further, the present invention relates to a rotor assembly, to an electrical machine and to a wind turbine, which are all equipped with such a permanent magnet assembly. Furthermore, the present invention relates to a method for fixing at least one permanent magnetic piece onto a base plate.

Electrical machines or electromechanical transducers are machines, which convert electrical energy into mechanical energy or vice versa. An electric motor is a widely used electrical machine that converts electrical energy into mechanical energy using magnetic field linkage. An electric generator is an electrical machine that converts mechanical energy into electrical energy also using a magnetic field linkage.

An electrical machine comprises a stator and a rotor. The stator is an assembly, which represents the stationary part of an electrical machine. The rotor is an assembly, which represents the moving part of an electrical machine.

In order to realize a magnetic field linkage, magnets, for instance permanent magnets, may be used in particular for a rotor of an electrical machine. In recent years, especially since the introduction of rare-earth magnetic materials, permanent magnet (PM) electrical machines have become popular since they eliminate the need for commutators and brushes, which are commonly used with conventional Direct Current (DC) electrical machine. The absence of an external electrical rotor excitation eliminates losses on the rotor and makes permanent magnet electrical machines more efficient. Further, the brushless design of a PM electrical machine allows conductor coils to be located exclusively in the stationary stator. In this respect it is mentioned that non-PM electrical machines, which are equipped with commutators and brushes, are susceptible to significantly higher maintenance costs.

PM electrical machines are also known for their durability, controllability, and absence of electrical sparking. Thanks to their advantages the PM electrical machines are widely used in many applications such as electric vehicles (electrical machine is a motor) or in power generation systems (electrical machine is a generator) such as for instance a wind turbine.

Strong permanent magnets, like rare-earth magnets, are used to an increasing extent in large electrical machines, especially in motors and generators. This is due to the increased efficiency and robustness compared to electrical excitation. But regarding practical applications some difficulties may occur. The materials, in particular of rare-earth magnets, may be rather brittle and cannot safely be fixed by bolting alone. The magnets may be fixed to a rotor rim for example by, for instance, gluing. Furthermore, it may be a difficult, time consuming and not least a hazardous process to handle the individual magnets and to get the correct position of each magnet as the magnets may be pulled towards other magnets and ferromagnetic objects in the production setup. Thus, the mounting and alignment of the permanent magnets at the rotor assembly are difficult and time consuming. Therefore, there may be a need for facilitating mounting and alignment of permanent magnets to a rotor assembly of an electrical machine.

Furthermore humidity and other aggressive substances and mechanical influences such as shocks and vibrations and mechanical stress due to heat extension can harm and damage the magnet.

There are existing solutions on the market for protecting the magnets. This is done by means of epoxy painting, powder coating, tape bondage or fully enclosed magnet modules.

To provide structural support and ease the fitting of the magnet to a rotor a magnet assembly is proposed, wherein a shape (i.e. a dovetail) is grind into the bedplate which fits into a complementary groove in the rotor yoke (see EP 2 348 619 A1).

The document US 2010/0231085 A1 discloses a pole retention configuration for electrical machine rotors. The rotor pole pieces are retained within complementarily shaped channels in a rotor hub. Permanent magnets are secured between the pole pieces and within clamp members.

The document WO 2009/068736 A1 describes a surface mountable permanent magnet element to be mounted onto the periphery of the rotor of a permanent magnet machine as polar element.

The document US 2011/0043065 A1 describes a method and apparatus for the installation and removal of permanent magnets in a permanent magnet electromechanical machine. The permanent magnets are installed on a magnet carrying structure by an interference fit.

It is a first objective of the present invention to provide an improved rotor assembly with an improved fixation of at least one permanent magnet piece to a base plate. A second objective of the present invention is to provide an electrical machine with the same advantages. A third objective of the present invention is to provide an advantageous wind turbine. A fourth objective of the present invention is to provide a method for fixing at least one permanent magnet piece onto a base plate in an element of an electrical machine.

The first objective is solved by a rotor assembly as claimed in claim 1. The second objective is solved by an electrical machine as claimed in claim 10. The third objective is solved by a wind turbine as claimed in claim 11. The fourth objective is solved by a method for fixing at least one permanent magnet piece onto a base plate in a rotor yoke of an electrical machine as claimed in claim 12. The depending claims define further advantageous embodiments of the invention.

The inventive rotor assembly for an electrical machine comprising a permanent magnet assembly and a rotor yoke with at least one groove for holding the permanent magnet assembly onto the rotor. The permanent magnet assembly comprises a base plate and at least one permanent magnet piece. The permanent magnet piece is attached to the base plate. The at least one permanent magnet piece is covered by a cover. The cover comprises at least one protrusion. The protrusion is designed to be laid onto a portion of the base plate. The protrusion and the portion of the base plate are slid into a groove of the rotor of the rotor.

The protrusion and the portion of the base plate are slid into at least one pre-shaped groove of the rotor yoke. Advantageously the cover comprises two protrusions, which can be slid into two grooves of an electrical machine.

The cover provides climatic protection against humidity and other aggressive substances. Furthermore, it provides mechanical protection against shock and vibration. Moreover, the cover serves as mechanical protection of the magnets and as protective coating against impact of foreign objects, for instance in an air gap and during handling. Further climatic protection against humidity and other aggressive substances may be achieved by coating the permanent magnet pieces.

The cover is designed to be slid into at least one groove, for example two grooves, where the cover is fixed by its geometry. The at least one magnet piece or the magnet pieces can be attached to the base plate by means of an adhesive. The assembly of permanent magnet piece and base plate and the cover may be mounted in an element of the electrical machine, for instance a rotor, at the same time by insertion. Generally, the cover may be glued to the magnet piece and/or to the base plate to enhance assembly.

The at least one permanent magnet piece may comprise NdFeB (Neodymium Iron Boron). Preferably, it consists of NdFeB. The cover may comprise steel or may consists of steel, for example stainless steel or magnetical steel.

The sum of the thickness of the protrusion and the thickness of the portion of the base plate may have a value between 2mm and 3mm. For example, the sum of the thickness of the protrusion and the thickness of the portion of the base plate may have a value between 2.5 mm and 2.8 mm, advantageously between 2.6 mm and 2.7 mm. Preferably, the sum of the thicknesses is 2.65 mm so that a proper and lasting connection in, for example, side grooves of a T-shaped slot of an element of an electrical machine, for instance a rotor yoke, can be formed.

In the context of the present invention a T-shaped slot comprises two side grooves. The T-shaped slot with the side grooves may be milled into the rotor.

Because the cover does not offer corrosion protection of the magnet piece, the magnet piece may be coated with a corrosion protecting means. This offers protection against a high corrosion class.

The inventive permanent magnet assembly may comprise a second base plate. The second base plate may be connected to the first base plate. The previously mentioned base plate, to which the at least on permanent magnet piece is attached, is then identical with the first base plate. The second base plate may be welded, for example spot welded, to the first base plate. The spot welding may be carried out on the base plate between two adjacent magnets.

Preferably, the second base plate comprises the portion which is designed to be slid together with the protrusion into a groove of an electrical machine. For example, a portion of the second base plate together with the protrusion of the cover fit into side grooves of a T-shaped slot.

The sum of the thickness of the protrusion and the thickness of the second base plate may have a value between 2 mm and 3 mm, for example between 2.5 mm and 2.8 mm, advantageously between 2.6 mm and 2.7 mm. Preferably, the sum of the thicknesses is 2.65 mm so that a proper and lasting connection in, for example, side grooves of a T-shaped slot of a rotor yoke is formed. Advantageously, the magnet piece is located above the groove and/or the T-shaped slot instead of inside the groove or T-shaped slot. This can be realised by a sufficient thickness of the base plate.

Preferably, the first base plate and/or the second base plate may have a rectangular shape. Especially the base area and the top surface of the first base plate and/or the second base plate may have a rectangular shape. This has the advantage, that a base plate is composed of two rectangular pieces which are very easy to machine to the desired geometry.

To further protect the magnet pieces against humidity and other aggressive substances, the magnet pieces can be additional surface treated.

Generally, the cover can extend along the whole base plate. For instance, between 2 and 6 permanent magnet pieces, preferably 4 permanent magnet pieces may be attached to the base plate. Preferably, the permanent magnet pieces can be glued onto the base plate. For example, each base plate may hold 4 permanent magnet pieces glued onto it. The cover can extend over the 4 magnets and along the whole base plate.

The inventive rotor assembly comprises a rotor yoke with at least one groove for holding the permanent magnet assembly onto the rotor. The groove may, for instance, be a side groove of a T-shaped slot. The rotor can comprise at least one T-shaped slot. The T-shaped slot with the side grooves may be milled into the rotor. Moreover, the groove may be designed for holding the base plate with the permanent magnet piece or pieces and the cover onto the rotor. For ex ample, the cover may comprise at least one protrusion which is inserted into a corresponding groove of the rotor yoke.

Preferably, the cover comprises two protrusions. The cover may be fixed to the rotor or rotor yoke by its geometry, for example by the geometry of the protrusions. The second base plate comprises two sides which are inserted together with the protrusion of the cover into corresponding grooves of the rotor yoke.

Advantageously the at least one groove or slot has a width between 2 mm and 3 mm, for example between 2.5 mm and 2.8 mm, advantageously between 2.6 mm and 2.7 mm, preferably 2.65 mm. Furthermore, the width of the groove is equal to the sum of the thickness of the protrusion of the cover and the thickness of the portion of the base plate which is inserted into the groove. For example, the sum of the thicknesses of the protrusion and the portion of the base plate which is inserted into the groove and the width of the groove may have a value of 2.65 mm. Preferably the permanent magnet piece is located completely outside of the T-shaped slot. For example, the base plate and the protrusion of the cover are thicker than the depth of the T-shaped slot.

The rotor may comprise a rotation axis. Preferably, the permanent magnet assembly is slid into the grooves, for example of T-shaped slot, in a direction parallel to the rotation axis of the rotor. In this case the grooves may have a length which extends in a direction parallel to the rotation axis of the rotor.

Generally, the fixation of the permanent magnet to the rotor can also be provided by the magnetic force, especially the magnetic pull, of the permanent magnet. Moreover, the rotor may be an outer rotor. The permanent magnet assemblies mounted in the rotor may face towards the rotation axis of the rotor.

The inventive electrical machine comprises a permanent magnet assembly as previously described or a rotor assembly as previously described. The inventive electrical machine has the same advantages as the previously described rotor assembly. For example, the inventive electrical machine may be a generator. A number of magnet modules or permanent magnet assemblies may be assembled in the generator by sliding them into side grooves of T-shaped slots formed in the rotor yoke. The magnet modules may be stacked very close to each other to offer a very small air gap between two neighbouring magnet modules. This further offers a maximum utilization of the magnet material for the electrical machine performance.

Generally, the generator may comprise a rotor, a stator and a rotation axis. The rotor may be located radially outside of the stator. This means, that the outer rotor may rotate around the inner stator. The permanent magnet pieces may be located on an inner surface of the rotor. The permanent magnet pieces may face towards the rotation axis.

The inventive wind turbine comprises a previously described electrical machine, for example a generator, and has the same advantages as the previously described electrical machine.

The inventive method for fixing at least one permanent magnet piece onto a base plate in a rotor yoke of an electrical machine comprises the features of method claim 12.

Before covering the permanent magnet piece with the cover, the magnet or the number of magnets may be attached to the base plate by means of an adhesive. Generally, the cover or sliding cover may be glued to the magnet piece and/or to the base plate to enhance assembly. By means of the inventive method an assembly of permanent magnet piece and base plate is obtained which provides climatic protection against humidity and other aggressive substances and mechanical protection of the permanent magnet piece against shock and vibration. Furthermore, the cover serves as mechanical protection of the magnets and as protective coating against impact of foreign objects, for instance in an air gap and during handling.

Generally, a magnet piece which comprises or consists of NdFeB may be used. Moreover, a cover comprising steel, for example stainless steel or magnetical steel, may be used The present invention generally offers the possibility of a modular design without the need for a complicated brazing or welding process of the cover and base plate assembly as in existing solutions. Moreover, it provides an effective protection of the permanent magnet piece against impact of foreign objects, humidity and other aggressive substances and against shock and vibration.

It has to be noted that embodiments of the invention have been described with reference to different subject matters.

In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Further features, properties and advantages of the present invention will become clear from the following description of an embodiment in conjunction with the accompanying drawings.
- Figure 1: schematically shows a wind turbine.
- Figure 2: schematically shows a permanent magnet assembly in a view parallel to the rotation axis in a sectional view.
- Figure 3: schematically shows part of a rotor in a sectional view.
- Figure 4: schematically shows part of a variant of a rotor in a sectional view.
- Figure 5: schematically shows part of a rotor yoke or rotor housing with a magnet assembly in a sectional view.

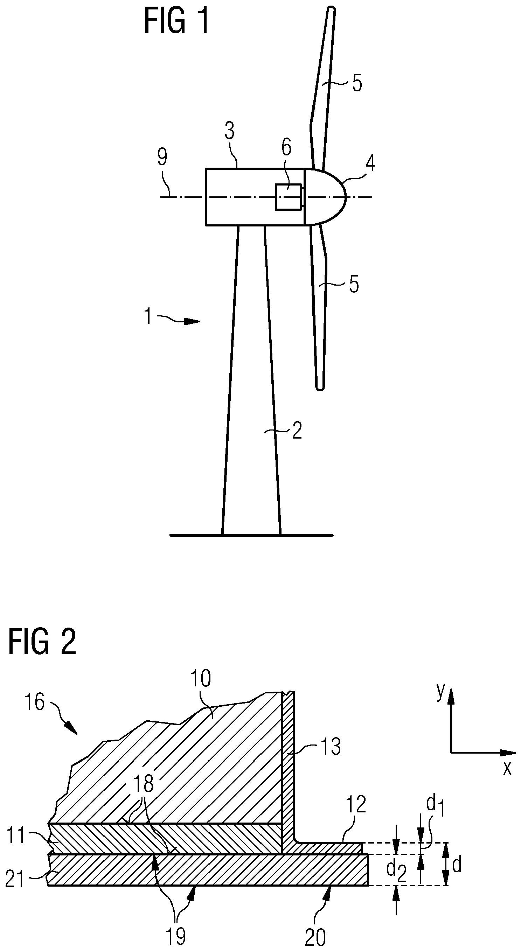

An embodiment of a present invention will now be described with reference to Figures 1 to 5.

Figure 1 schematically shows a wind turbine 1. The wind turbine 1 comprises a tower 2, a nacelle 3 and a hub 4. The nacelle 3 is located on top of the tower 2. The hub 4 comprises a number of wind turbine blades 5. The hub 4 is mounted to the nacelle 3. Moreover, the hub 4 is pivot-mounted such that it is able to rotate about a rotation axis 9. An electrical machine, for example a generator 6, is located inside the nacelle 3. The wind turbine 1 is a direct drive wind turbine.

Figure 2 schematically shows a permanent magnet assembly in a view parallel to the rotation axis. The permanent magnet assembly 16 which is shown in Figure 2 comprises a permanent magnet piece 10, for example a NdFeB magnet piece, a first base plate 11, a second base plate 21, and a steel cover 13, for example a stainless steel or magnetical steel cover. The cover 13 comprises two protrusions 12; one protrusion 12 is shown in Figure 2.

The magnet piece 10 is laid onto the first base plate 11. For example, the magnet piece 10 may be attached to the first base plate 11 by means of an adhesive. The magnet piece 10 and the first base plate 11 are covered by the cover 13. The second base plate 21 is connected to the first base plate 11, for instance by means of spot welding. Preferably, the spot welding is carried out on the base plate 11 and 21 between two adjacent magnets 10. Moreover, the cover 13 may be glued to the magnet piece 10 and/or to the first base plate 11 and/or second base plate 12.

The first base plate 11 and the second base plate 21 have a rectangular shape. This means that the base area 19 and the top surface 18 of the base plates 11 and 21 have a rectangular shape. The second base plate 21 has a larger surface area than the first base plate 11. The second base plate 21 protrudes the first base plate 11, at least in x-direction as shown in Figure 2.

The protrusion 12 lies onto a portion 20 of the second base plate 21, which protrudes the first base plate 11 in x-direction. The thickness d of the protrusion 12 and the portion 20, which is the sum of the thickness d₁ of the protrusion 12 and the thickness d₂ of the second base plate 21, in y-direction is approximately 2.65 mm so that it forms a proper and lasting connection in side grooves of T-shaped slots.

The cover 13 does not offer corrosion protection of the magnet piece 10. Therefore, the magnet piece 10 can be coated by means of a corrosion protecting means to offer protection against a high corrosion class. Moreover, since the cover 13 does not necessarily cover the whole surface of the permanent magnets 10, an additional corrosion protection is useful.

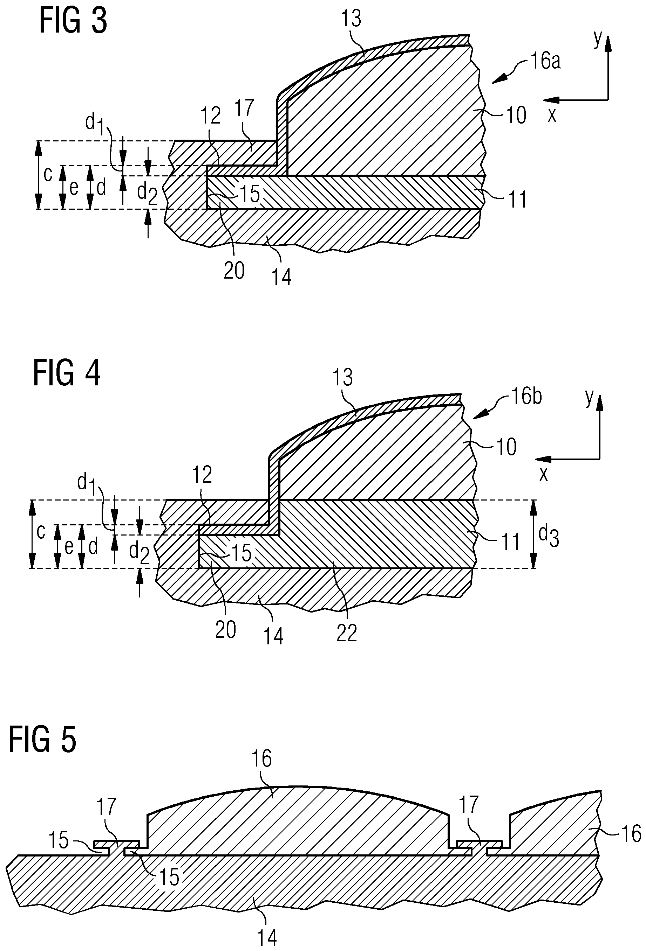

Figure 3 schematically shows a sectional view of part of a rotor or a rotor assembly which is equipped with a variant of a previously described permanent magnet assembly. The rotor assembly comprises a rotor yoke or rotor housing 14. The rotor yoke 14 comprises a number of T-shaped protrusions 17. By means of the protrusions 17 so called T-shaped slots are formed. Each T-shaped slot comprises two side grooves 15 for mounting the magnet assembly 16. The T-shaped slots have a depth c.

The permanent magnet assembly 16a, as shown in Figure 3, comprises a permanent magnet 10, which is attached to a base plate 11. The base plate 11 protrudes the permanent magnet 10 in x-direction. The magnet piece 10 is covered by the cover 13. The protrusion 12 of the cover 13 lies onto the portion 20 of the base plate 11, which protrudes the magnetic piece 10.

The thickness d of the protrusion 12 and the portion 20, which is the sum of the thickness d₁ of the protrusion 12 and the thickness d₂ of the base plate 11, in y-direction is approximately 2.65 mm so that it forms a proper and lasting connection in side grooves 15 of T-shaped slots.

The permanent magnet assembly 16a, as shown in Figure 3, is slid into the grooves 15 such that the protrusion 12 and the portion 20 of the base plate 11 are inserted into the groove 15. The groove 15 has a width e which is preferably equal to the thickness d, which is the sum of the thickness d₁ of the protrusion 12 and the thickness d₂ of the base plate 11. Thus, the magnet 10 is located outside of the side groove 15 instead of inside the groove 15.

Each protrusion 12 is slid into a pre-shaped groove 15 in, for example, a generators rotor, where the cover 13 is fixed by its geometry or the geometry of the protrusion 12. The magnet-base plate assembly, comprising the permanent magnet piece 10 and the base plate 11, and the cover 13 are mounted in the rotor 14 or rotor yoke at the same time by insertion the protrusion 12 and the portion 20 of the base plate 11 into pre-shaped grooves 15. Preferably, the permanent magnet assembly is slid into the grooves 15 in a direction parallel to the rotation axis of the rotor.

Figure 4 schematically shows part of a variant of a rotor in a sectional view. The permanent magnet assembly 16b, as shown in Figure 4, differs from the permanent magnet assembly 16a, as shown in Figure 3, in that the thickness d₃ of the base plate 11 at the portion 22, where the permanent magnet 10 is attached to it, is different from the thickness d₂ of the base plate 11 at the portion 20, which is inserted into the groove 15. In Figure 4 the thickness d₂ is less than the thickness d₃. Moreover, the d₃ of the base plate 11 at the portion 22, where the permanent magnet 10 is attached to it, has a value which is equal to the depth c of the T-shaped slot or higher than the depth c of the T-shaped slot. This provides that the permanent magnet 10 is located completely outside of the T-shaped slot.

Generally all previously described permanent magnet assemblies 16, 16a and 16b can be replaced by each other and have the same functionality and advantages. Moreover, the magnet pieces may comprise or consist of NdFeB. The cover may advantageously a steel cover.

Figure 5 schematically shows two neighbouring magnet assemblies 16 which are connected to a rotor yoke 14 by inserting them into side grooves 15 of T-shaped slots formed by protrusions 17 of the rotor yoke 14. The rotor assembly may be part of a generator 6, for example of a wind turbine generator.

The present invention provides a climatic protection against humidity and other aggressive substances as well as a mechanical protection of the permanent magnet pieces against impact of foreign objects, shock and vibration by means of the used cover.

## Claims

1. A rotor assembly for an electrical machine (6) comprising a permanent magnet assembly (16) and a rotor yoke (14) with at least one groove (15) for holding the permanent magnet assembly (16) onto the rotor, the permanent magnet assembly (16) comprising a base plate (11) and at least one permanent magnet piece (10) which is attached to the base plate (11), the at least one permanent magnet piece (10) is covered by a cover (13), the cover (13) comprising at least one protrusion (12), the protrusion (12) being designed to be laid onto a portion (20) of the base plate (11, 21), the protrusion (12) and the portion (20) of the base plate (11, 21) being slid into the groove (15) **characterised in that**
the width (e) of the groove (15) is equal to the sum of the thickness (d1) of the protrusion (12) of the cover (13) and the thickness (d2) of the portion (20) of the base plate (11, 12) which is inserted into the groove (15).

2. The rotor assembly as claimed in claim 1,
**characterised in that**
the at least one permanent magnet piece (10) comprises NdFeB.

3. The rotor assembly as claimed in claim 1 or claim 2,
**characterised in that**
the cover (13) comprises steel.

4. The rotor assembly as claimed in any of the claims 1 to 3,
**characterised in that**
the sum of the thicknesses of the protrusion (12) and the thickness of the portion (20) of the base plate (11, 12) has a value between 2mm and 3mm.

5. The rotor assembly as claimed in any of the claims 1 to 4,
**characterised in that**
between 2 and 6 permanent magnet pieces (10) are attached to the base plate (11).

6. The rotor assembly as claimed in any of the claims 1 to 5, **characterised in that**
the permanent magnet assembly (16) comprises a second base plate (21) which is connected to the first base plate (11).

7. The rotor assembly as claimed in claim 6,
**characterised in that**
the second base plate (21) comprises the portion (20) which is designed to be slid together with the protrusion (12) into a groove (15) of an electrical machine (6).

8. The rotor assembly as claimed in claim 6 or claim 7,
**characterised in that**
the second base plate (12) comprises two sides which are inserted together with the protrusion (12) of the cover (13) into corresponding grooves (15) of the rotor yoke (14).

9. The rotor assembly as claimed in any of the claims 1 to 8, **characterised in that**
the at least one groove (15) has a width between 2mm and 3mm.

10. An electrical machine (6) comprising a rotor assembly as claimed in any of the claims 1 to 9.

11. A wind turbine (1) comprising an electrical machine (6) as claimed in claim 10.

12. A method for fixing at least one permanent magnet piece (10) onto a base plate (11) in a rotor yoke (14) of an electrical machine (6), comprising the steps of
- placing at least one permanent magnet piece (10) onto the base plate (11),
- covering the permanent magnet piece (10) with a cover (13) comprising at least one protrusion (12),
**characterised in**
- fixing the assembly of the base plate (11), the permanent magnet piece (10) and the cover (13) to the rotor yoke (14) by inserting the at least one protrusion (12) of the cover (13) together with a portion (20) of the base plate into a corresponding groove (15) of the rotor yoke (14), wherein the width (e) of the groove (15) is equal to the sum of the thickness (d1) of the protrusion (12) of the cover (13) and the thickness (d2) of the portion (20) of the base plate (11, 12) which is inserted into the groove (15).

## Patentansprüche

1. Rotoranordnung für eine elektrische Maschine (6) mit einer Dauermagnetanordnung (16) und einem Rotorjoch (14) mit mindestens einer Nut (15) zum Halten der Dauermagnetanordnung (16) auf dem Rotor, wobei die Dauermagnetanordnung (16) eine Grundplatte (11) und mindestens ein Dauermagnetstück (10) umfasst, das an der Grundplatte (11) angebracht ist, wobei das mindestens eine Dauermagnetstück (10) von einer Abdeckung (13) abgedeckt ist, wobei die die Abdeckung (13) mindestens einen Vorsprung (12) aufweist, wobei der Vorsprung (12) dafür ausgebildet ist, auf einen Abschnitt (20) der Grundplatte (11, 21) gelegt zu werden, wobei der Vorsprung (12) und der Abschnitt (20) der Grundplatte (11, 21) in die Nut (15) hinein geschoben wird,
**dadurch gekennzeichnet, dass**
die Breite (e) der Nut (15) gleich der Summe aus der Dicke (d1) des Vorsprungs (12) der Abdeckung (13) und der Dicke (d2) des Abschnitts (20) der Grundplatte (11, 12), der in die Nut (15) hinein geschoben wird, ist.

2. Rotoranordnung nach Anspruch 1,
**dadurch gekennzeichnet, dass**
das mindestens eine Dauermagnetstück (10) NdFeB enthält.

3. Rotoranordnung nach Anspruch 1 oder Anspruch 2,
**dadurch gekennzeichnet, dass**
die Abdeckung (13) Stahl enthält.

4. Rotoranordnung nach einem der Ansprüche 1 bis 3,
**dadurch gekennzeichnet, dass**
die Summe der Dicke des Vorsprungs (12) und der Dicke des Abschnitts (20) der Grundplatte (11, 12) einen Wert zwischen 2 mm und 3 mm hat.

5. Rotoranordnung nach einem der Ansprüche 1 bis 4,
**dadurch gekennzeichnet, dass**
zwischen 2 und 6 Dauermagnetstücke (10) an der Grundplatte (11) angebracht sind.

6. Rotoranordnung nach einem der Ansprüche 1 bis 5,
**dadurch gekennzeichnet, dass**
die Dauermagnetanordnung (16) eine zweite Grundplatte (21) umfasst, die mit der ersten Grundplatte (11) verbunden ist.

7. Rotoranordnung nach Anspruch 6,
**dadurch gekennzeichnet, dass**
die zweite Grundplatte (21) den Abschnitt (20) umfasst, der dafür ausgebildet ist, zusammen mit dem Vorsprung (12) in die Nut (15) einer elektrischen Maschine (6) hinein geschoben zu werden.

8. Rotoranordnung nach Anspruch 6 oder 7,
**dadurch gekennzeichnet, dass**
die zweite Grundplatte (12) zwei Seiten umfasst, die zusammen mit dem Vorsprung (12) der Abdeckung (13) in entsprechende Nuten (15) des Rotorjochs (14) hinein geschoben werden.

9. Rotoranordnung nach einem der Ansprüche 1 bis 8,
**dadurch gekennzeichnet, dass**
die mindestens eine Nut (15) eine Breite zwischen 2 mm und 3 mm hat.

10. Elektrische Maschine (6) mit einer Rotoranordnung nach einem der Ansprüche 1 bis 9.

11. Windkraftanlage (1) mit einer elektrischen Maschine (6) nach Anspruch 10.

12. Verfahren zum Befestigen von mindestens einem Dauermagnetstück (10) auf einer Grundplatte (11) in einem Rotorjoch (14) einer elektrischen Maschine (6), das die folgenden Schritte umfasst:
- Anbringen von mindestens einem Dauermagnetstück (10) auf der Grundplatte (11),
- Abdecken des Dauermagnetstücks (10) mit einer Abdeckung (13),
**gekennzeichnet durch**
- Befestigen der Anordnung der Grundplatte (11), des Dauermagnetstücks (10) und der Abdeckung (13) an dem Rotorjoch (14) durch
Hineinschieben des mindestens einen Vorsprungs (12) der Abdeckung (13) zusammen mit einem Abschnitt (20) der Grundplatte in eine entsprechende Nut (15) des Rotorjochs (14), wobei die Breite (e) der Nut (15) gleich der Summe aus der Dicke (d1) des Vorsprungs (12) der Abdeckung (13) und der Dicke (d2) des Abschnitts (20) der Grundplatte (11, 12), der in die Nut (15) hinein geschoben wird, ist.

## Revendications

1. Ensemble de rotor pour une machine électrique (6) comprenant un ensemble d'aimant permanent (16) et une culasse de rotor (14) avec au moins une rainure (15) permettant de maintenir l'ensemble d'aimant permanent (16) sur le rotor, l'ensemble d'aimant permanent (16) comprenant une plaque de base (11) et au moins un aimant permanent (10) qui est fixé à la plaque de base (11), le au moins un aimant permanent (10) est recouvert par une couverture (13), la couverture (13) comprenant au moins une saillie (12), la saillie (12) étant conçue afin d'être disposée sur une partie (20) de la plaque de base (11, 21), la saillie (12) et la partie (20) de la plaque de base (11, 21) étant coulissées dans la rainure (15),
**caractérisé en ce que**
la largeur (e) de la rainure (15) est égale à la somme de l'épaisseur (d1) de la saillie (12) de la couverture (13) et de l'épaisseur (d2) de la partie (20) de la plaque de base (11, 12) qui est insérée dans la rainure (15).

2. Ensemble de rotor selon la revendication 1,
**caractérisé en ce que**
le au moins un aimant permanent (10) comprend du NdFeB.

3. Ensemble de rotor selon la revendication 1 ou 2,
**caractérisé en ce que**
la couverture (13) comprend de l'acier.

4. Ensemble de rotor selon l'une quelconque des revendications 1 à 3,
**caractérisé en ce que**
la somme des épaisseurs de la saillie (12) et de l'épaisseur de la partie (20) de la plaque de base (11, 12) présente une valeur comprise entre 2 mm et 3 mm.

5. Ensemble de rotor selon l'une quelconque des revendications 1 à 4,
**caractérisé en ce que**
entre 2 et 6 aimants permanents (10) sont fixés à la plaque de base (11).

6. Ensemble de rotor selon l'une quelconque des revendications 1 à 5,
**caractérisé en ce que**
l'ensemble d'aimant permanent (16) comprend une seconde plaque de base (21) qui est raccordée à la première plaque de base (11).

7. Ensemble de rotor selon la revendication 6,
**caractérisé en ce que**
la seconde plaque de base (21) comprend la partie (20) qui est conçue afin d'être coulissée avec la saillie (12) dans une rainure (15) d'une machine électrique (6).

8. Ensemble de rotor selon la revendication 6 ou la revendication 7,
**caractérisé en ce que**
la seconde plaque de base (12) comprend deux côtés qui sont insérés ensemble avec la saillie (12) de la couverture (13) dans des rainures correspondantes (15) de la culasse de rotor (14).

9. Ensemble de rotor selon l'une quelconque des revendications 1 à 8,
**caractérisé en ce que**
la au moins une rainure (15) présente une largeur comprise entre 2 mm et 3 mm.

10. Machine électrique (6) comprenant un ensemble de rotor selon l'une quelconque des revendications 1 à 9.

11. Éolienne (1) comprenant une machine électrique (6) selon la revendication 10.

12. Procédé de fixation d'au moins un aimant permanent (10) sur une plaque de base (11) dans une culasse de rotor (14) d'une machine électrique (6), comprenant les étapes consistant à
- placer au moins un aimant permanent (10) sur la plaque de base (11),
- couvrir l'aimant permanent (10) avec une couverture (13) comprenant au moins une saillie (12),
**caractérisé par**
- la fixation de l'ensemble de la plaque de base (11), de l'aimant permanent (10) et de la couverture (13) à la culasse de rotor (14) en insérant la au moins une saillie (12) de la couverture (13) avec une partie (20) de la plaque de base dans une rainure correspondante (15) de la culasse de rotor (14), dans lequel la largeur (e) de la rainure (15) est égale à la somme de l'épaisseur (d1) de la saillie (12) de la couverture (13) et de l'épaisseur (d2) de la partie (20) de la plaque de base (11, 12) qui est insérée dans la rainure (15).
